# EUROPÄISCHE PATENTSCHRIFT

(11) **EP 3 487 716 B1**
(45) Veröffentlichungstag und Bekanntmachung des Hinweises auf die Patenterteilung: **15.07.2020**
(21) Anmeldenummer: 17725924.9
(22) Anmeldetag: 18.05.2017
(51) Int. Cl.: B60C 11/03

(54) **FAHRZEUGLUFTREIFEN**
VEHICLE TYRE
PNEUMATIQUE DE VÉHICULE

(30) Priorität: 21.07.2016 DE 102016213334
(43) Veröffentlichungstag der Anmeldung: 29.05.2019
(73) Patentinhaber: Continental Reifen Deutschland GmbH, 30165 Hannover (DE)
(72) Erfinder: RITTWEGER, Stefan, 30826 Garbsen (DE)
(74) Vertreter: Finger, Karsten
(86) Internationale Anmeldenummer: PCT/EP2017/061917
(87) Internationale Veröffentlichungsnummer: WO 2018/015044

(56) Entgegenhaltungen:
- EP-A1- 2 239 153
- EP-A1- 2 636 544
- WO-A1-2015/111302
- DE-A1-102012 108 384

## Beschreibung

Die Erfindung betrifft ein Laufstreifenprofil eines Fahrzeugluftreifens - insbesondere eines PKW-Fahrzeugluftreifens - mit wenigstens einer Umfangsrippe, die in radialer Richtung R nach außen hin von einer die Bodenkontaktfläche bildenden radial äußeren Oberfläche und in axialer Richtung A von Umfangsrillen begrenzt ist, wobei in der Umfangsrippe querverlaufende Rillen ausgebildet sind, welche sich ausgehend von einem mit axialem Abstand zu den die Umfangsrippe begrenzenden Umfangsillen ausgebildeten Erstreckungsanfang der Rille in axialer Richtung A in Richtung zu einer die Umfangsrippe begrenzenden Umfangsrille über einen ersten Erstreckungsabschnitt und über einen in axialer Richtung A an den ersten Erstreckungsabschnitt anschließenden zweiten Erstreckungsabschnitt erstrecken und in die Umfangsrille münden, wobei die Rille mit einer längs ihrer gesamten Erstreckung zwischen Erstreckungsanfang und Umfangsrille zunehmenden Breite b ausgebildet ist, welche in der radial äußeren Oberfläche gemessen wird, wobei die Rille in ihrem Erstreckungsverlauf zwischen erstem Erstreckungsabschnitt und zweitem Erstreckungsabschnitt mit einer Knickstelle ausgebildet ist, wobei die Erstreckungsrichtung der Rille ausgehend von dem Erstreckungsanfang längs ihrer Erstreckung im ersten Erstreckungsabschnitt bis zur Knickstelle mit einer größeren Richtungskomponente in Umfangsrichtung U als in axialer Richtung A und von der Knickstelle über den gesamten zweiten Erstreckungsabschnitt bis hin zur Einmündung in die Umfangsrille mit einer größeren Richtungskomponente in axialer Richtung A als in Umfangsrichtung ausgebildet ist.

Derartige Fahrzeugluftreifen sind bekannt.

Es sind Laufstreifenprofile von Pkw-Reifen bekannt mit Umfangsrippen, welche durch Umfangsrillen axial begrenzt werden. Die Umfangsrippen ermöglichen eine hohe Steifigkeit des Profils in Umfangs- und Querrichtung, wodurch gute Handlingeigenschaften begünstigt werden. Allerdings ist die Entwässerung im Bereich der Umfangsrippe erschwert, wodurch gerade bei Pkw-Reifenprofilen mit ihren Einsatzbedingungen mit höheren Geschwindigkeiten bei geringer Last Aquaplaning-Effekte und schlechter Nassgriff begünstigt werden. Gerade bei breiteren Umfangsrippen kann sich dies besonders auswirken.

Es ist bekannt zur verbesserten Entwässerung in Umfangsrippen von Pkw-Reifen, zusätzlich querverlaufende Rillen auszubilden, welche sich zwischen einer axialen Position, die zwischen den beiden die Umfangsrippe begrenzenden Umfangsrillen liegt, in Richtung zu einer Umfangsrille hin erstrecken und in die Umfangsrille münden. Hierdurch wird es ermöglicht, dass Wasser im Bereich der Querrille aufgenommen und zur Umfangsrille abgeleitet wird. Allerdings sind die Aufnahmekapazität und die Geschwindigkeit der Entwässerung beschränkt. Die Aufnahmekapazität kann durch größere Dimensionierung der Querrille mit großer Breite und großer Tiefe etwas verbessert werden. Eine große Breite und Tiefe der Querrillen reduziert jedoch die Steifigkeit der Umfangsrippe. Damit beim Durchlaufen des Reifenlatsches ausreichend Wasser im Bereich der Rippe aufgenommen und abtransportiert werden kann, können die Querrillen auch dicht hintereinander angeordnet werden. Die hohe Dichte der Positionierung der Querrillen reduziert jedoch ebenso wie die große Dimensionierung von Breite und Tiefe der Querrillen die Steifigkeit der Umfangsrippe und somit die möglichen Handlingeigenschaften.

Es ist bekannt, Umfangsrippen mit quer verlaufenden Rillen auszubilden, welche ausgehend von einem mit Abstand zu den Umfangsrillen ausgebildeten Erstreckungsanfang über einen ersten Erstreckungsabschnitt bis zu einer Knickstelle erstreckt ausgebildet sind und von der Knickstelle zur Umfangsrille hin in einem zweiten Erstreckungsabschnitt, wobei im ersten Erstreckungsabschnitt, die Richtungskomponente in Umfangsrichtung größer ausgebildet ist als die axiale Erstreckungsrichtung und im zweiten Erstreckungsabschnitt die Umfangsrichtungskomponente kleiner ausgebildet ist als die axiale Erstreckungsrichtung und wobei die Breite längs ihrer Erstreckung vom Rillenanfang bis zur Umfangsrille hin zunimmt. Die Rillentiefe der Rillen ist im Wesentlichen über ihre Erstreckung hinweg konstant. Diese Rillen ermöglichen zwar die Ausbildung einer größere Erstreckungslänge der einzelnen quer verlaufenden Rille in der Umfangsrippe und somit eine größere Aufnahmekapazität von Wasser. Allerdings sind derartige Rillen mit ihrer lange erstreckten Ausbildung entweder mit groß ausgebildeter Tiefe und somit mit ausreichender Wasseraufnahmekapazität ausgestattet, allerdings unter Inkaufnahme von deutlichen Steifigkeitsverlusten der Umfangsrippe und somit von Nachteilen hinsichtlich der Handlingeigenschaften, oder aber sie sind mit derartig geringen Tiefen ausgebildet, dass zwar die Steifigkeit der Umfangsrippe weniger stark eingeschränkt ist, aber unter Inkaufnahme, dass auch die Wasseraufnahmekapazität und somit Aquaplaning-Eigenschaften und die Nassgriffeigenschaften beschränkt sind.

Aus der DE 2014 006 967 U1 ist beispielsweise eine derartige Ausbildungen des Laufstreifenprofils bei einem Nutzfahrzeugluftreifen, bei dem nur geringe Geschwindigkeiten und hohe Lasten die Einsatzbedingungen des Reifens bestimmen, bekannt, bei welchem eine entsprechend geringe Rillentiefe gewählt ist.

Aus der EP2489526B1 ist ein Laufstreifenprofil eines PKW-Reifens bekannt, bei welchem in Profilblockreihen geradlinig erstreckte Querrillen ausgebildet sind, die sich durch die gesamte Profilblockreihe von Umfangsrille zu Umfangsrille erstrecken und über ihre größten Erstreckungsabschnitt mit geringer Tiefe und geringer Breite ausgebildet sind und die lediglich in einem kurz ausgebildete Endabschnitt, der in die eine Umfangsrille mündet, längs ihrer Erstreckung zu dieser Umfangsrille hin mit einer zunehmenden Breite und Tiefe ausgebildet sind. Die spezielle Ausbildung ermöglicht aufgrund einer düsenartigen Sauwirkung eine verbesserte Entwässerung aus den schmalen Querrillen geringer Tiefe direkt in die Umfangsrille. Die kurzen Erstreckungsabschnitte der Verbreiterung und Vertiefung der Querrillen wirken sich auch nur geringfügig auf die Umfangssteifigkeit der Profilblockreihen und die Trockenbremseigenschaften aus. Allerdings ermöglichen derartig kurze Rillenabschnitte lediglich eine beschränkte Entwässerung bei Umfangsrippen. Eine stärkere Entwässerung bei Umfangsrippen erfordert entweder eine hohe Dichte der Rillenanordnung und /oder große Breiten und Tiefen von Rillen in der Rippe. Beides geht zu Lasten der Umfangs- und Quersteifigkeit der Umfangsrippe und beeinträchtigt somit gute Handlingeigenschaften.

Aus DE 10 2012 108 384 A1ist ein Laufstreifenprofil gemäß den Merkmalen des Oberbegriffs bekannt.

Der Erfindung liegt daher die Aufgabe zugrunde, Laufstreifenprofile mit Umfangsrippen in einfacher Weise zu ermöglichen, bei denen der Zielkonflikt einer guten Entwässerung bei ausreichend hoher Steifigkeit der Umfangsrippe zur Erzielung guter Handlingeigenschaften auf einem höheren Niveau ermöglicht wird.

Die Aufgabe wird erfindungsgemäß durch die Ausbildung eines Laufstreifenprofils eines Fahrzeugluftreifens - insbesondere eines PKW-Fahrzeugluftreifens - mit wenigstens einer Umfangsrippe, die in radialer Richtung R nach außen hin von einer die Bodenkontaktfläche bildenden radial äußeren Oberfläche und in axialer Richtung A von Umfangsrillen begrenzt ist, wobei in der Umfangsrippe querverlaufende Rillen ausgebildet sind, welche sich ausgehend von einem mit axialem Abstand zu den die Umfangsrippe begrenzenden Umfangsillen ausgebildeten Erstreckungsanfang der Rille in axialer Richtung A in Richtung zu einer die Umfangsrippe begrenzenden Umfangsrille über einen ersten Erstreckungsabschnitt und über einen in axialer Richtung A an den ersten Erstreckungsabschnitt anschließenden zweiten Erstreckungsabschnitt erstrecken und in die Umfangsrille münden, wobei die Rille mit einer längs ihrer gesamten Erstreckung zwischen Erstreckungsanfang und Umfangsrille zunehmenden Breite b ausgebildet ist, welche in der radial äußeren Oberfläche gemessen wird, wobei die Rille in ihrem Erstreckungsverlauf zwischen erstem Erstreckungsabschnitt und zweitem Erstreckungsabschnitt mit einer Knickstelle ausgebildet ist, wobei die Erstreckungsrichtung der Rille ausgehend von dem Erstreckungsanfang längs ihrer Erstreckung im ersten Erstreckungsabschnitt bis zur Knickstelle mit einer größeren Richtungskomponente in Umfangsrichtung U als in axialer Richtung A und von der Knickstelle über den gesamten zweiten Erstreckungsabschnitt bis hin zur Einmündung in die Umfangsrille mit einer größeren Richtungskomponente in axialer Richtung A als in Umfangsrichtung ausgebildet ist, gemäß den Merkmalen von Anspruch 1 gelöst, bei dem die Rille im ersten Erstreckungsabschnitt mit einer Tiefe T₁ ausgebildet ist, welche ausgehend vom Erstreckungsanfang längs der Erstreckung über den ersten Erstreckungsabschnitt bis zur Erreichung ihres Maximalwertes T₁ₘₐₓ an der Knickstelle kontinuierlich zunehmend und im zweien Erstreckungsabschnitt mit kontanter Tiefe T₂ mit T2 ≥ T₁ₘₐₓ ausgebildet ist.

Durch diese Ausbildung wird es ermöglicht, dass die in der Umfangsrippe querverlaufende Rillen mit einer relativ langen Erstreckungslänge zur Wirkung kommen, wobei längs der Erstreckung ausgehend vom Erstreckungsanfang in der Umfangsrippe bis zum Erstreckungsende an der Umfangsrille die Breite der Rille zunimmt und die Tiefe im ersten Erstreckungsabschnitt bis zur Knickstelle hin zunehmend ausgebildet ist. In dem im Wesentlichen in Umfangsrichtung gerichteten ersten Erstreckungsabschnitt kann somit eine Sogwirkung erzeugt werden, welche das Wasser mit erhöhter Fließgeschwindigkeit wie mit einer Düse ansaugt und somit mit erhöhter Fließströmungsgeschwindigkeit bis in die im zweiten Erstreckungsabschnitt mit größerer Tiefe und größerer Breite als der erste Erstreckungsabschnitt ausgebildete Auffangkammer gefördert wird. Das Wasser kann in der großen Auffangkammer aufgenommen und aufgrund der weiterhin zunehmenden Breite der Rille gut in die Umfangsrille abgeleitet werden. Durch die Ausbildung des ersten Erstreckungsabschnittes mit längs der Erstreckung ausgehend vom Erstreckungsanfang bis zur Knickstelle ausgebildete zunehmender Rillentiefe und zunehmender Breite wird die Sogwirkung über einen langen Umfangsabschnitt in der Umfangsrippe erzeugt ohne dabei jedoch die Steifigkeit der Umfangsrippe wesentlich zu beeinträchtigen. Die Ausbildung des großen wirksamen Aufnahmereservoirs im zweiten Erstreckungsabschnitt ermöglicht eine hohe Aufnahmekapazität von Wasser. Dabei wird jedoch sein Einfluss auf die Steifigkeit der Umfangsrippe aufgrund der nur auf den zweiten Erstreckungsabschnitt begrenzten Ausbildung ebenfalls beschränkt. Somit kann trotz guter schneller Wasserableitung bei großer Aufnahmekapazität der Einfluss auf die Steifigkeit der Umfangsrippe stark begrenzt werden. Auf diese Weise ist auch bei Pkw-Reifen mit Umfangsrippen eine weiter verbesserte Entwässerung im Bereich der Umfangsrippen bei guten Handlingeigenschaften einfach umsetzbar. Die ersten Erstreckungsabschnitte ermöglichen dabei über einen langen Umfangserstreckungsabschnitt der Umfangsrippe Wasser beschleunigt abzuleiten ohne die Steifigkeit der Umfangsrippe stark zu beeinträchtigen. Die hohe Wasserableitfähigkeit wird ermöglicht ohne die Zahl der Querrillen in der Umfangsrippe zu erhöhen.

Besonders vorteilhaft ist die Ausbildung eines Fahrzeugreifens gemäß den Merkmalen von Anspruch 2, wobei die Rille längs ihrer Erstreckung zur Umfangsrille hin im Anschluss an den zweiten Erstreckungsabschnitt mit einem dritten Erstreckungsabschnitt ausgebildet ist, welcher sich bis zur Umfangsrille erstreckt, wobei die Rille im dritten Erstreckungsabschnitt mit einer konstanten Tiefe T₃ ausgebildet ist mit T₂ > T₃. Hierdurch wird eine zusätzliche Stabilisierung der Umfangsrippe gegen Blockabsenkungen und unregelmäßigen Abrieb im Übergangsbereich der Rille zur Umfangsrille hin ermöglicht.

Besonders vorteilhaft ist die Ausbildung eines Fahrzeugreifens gemäß den Merkmalen von Anspruch 3, wobei die Rille längs ihrer Erstreckung in Richtung zur Umfangsrille im dritten Erstreckungsabschnitt hin im Anschluss an den zweiten Erstreckungsabschnitt mit einer v-förmig erweiterter Schnittkontur in der radial äußeren Oberfläche und in ihrer Breite mit größerer Zunahme ausgebildet ist als im zweiten und im ersten Erstreckungsabschnitt. Hierdurch kann in einfacher Weise auch im Übergangsbereich zur Umfangsrille trotz der reduzierten Rillentiefe ein großes Rillenvolumen zur Aufnahme und Ableitung einer größeren Wassermenge und ein optimaler Abfluss bereitgestellt werden.

Besonders vorteilhaft ist die Ausbildung eines Fahrzeugreifens gemäß den Merkmalen von Anspruch 4, wobei die Rille in ihrem ersten Erstreckungsabschnitt mit einer Erstreckungsrichtung erstreckt ausgebildet ist, die einen Neigungswinkel α zur Umfangsrichtung U mit 0°≤α≤20° einschließt. Hierdurch kann im ersten Erstreckungsabschnitt in einfacher Weise eine gute Oberflächenentwässerung umgesetzt werden ohne Nachteile hinsichtlich der Geräuschbildung.

Besonders vorteilhaft ist die Ausbildung eines Fahrzeugreifens gemäß den Merkmalen von Anspruch 5, wobei die Rille in ihrem Erstreckungsabschnitt zwischen Knickstelle und Umfangsrille mit einer Erstreckungsrichtung erstreckt ausgebildet ist, die einen Neigungswinkel β zur axialen Richtung A mit 0°≤ β ≤ 35° einschließt. Durch diese Querorientierung kann in einfacher Weise gute Traktion bei Nässe und eine gutes Abriebbild ermöglicht werden.

Besonders vorteilhaft ist die Ausbildung eines Fahrzeugreifens gemäß den Merkmalen von Anspruch 6, wobei die Rille längs ihrer Erstreckung in Richtung zur Umfangsrille hin im ersten und im zweiten Erstreckungsabschnitt mit einer v-förmig erweiterter Schnittkontur in der radial äußeren Oberfläche mit kontinuierlich zunehmender Breite ausgebildet ist. Hierdurch kann in einfacher Weise über den gesamten Erstreckungsbereich der Rille ein großes Rillenvolumen zur Aufnahme und Ableitung einer größeren Wassermenge und ein optimaler Abfluss bereitgestellt werden.

Besonders vorteilhaft ist die Ausbildung eines Fahrzeugreifens gemäß den Merkmalen von Anspruch 7, wobei im Übergang zwischen erstem und zweitem Erstreckungsabschnitt der Rillengrund mit einer Stufe abgesenkt ist mit sprunghafter Veränderung der Rillentiefe von T₁ₘₐₓ auf T₂, wobei 0mm ≤ (T₂ - T₁ₘₐₓ ) ≤ 3mm. Hierdurch können in einfacher Weise Handling-Eigenschaften begünstigt und unregelmäßigem Abrieb entgegengewirkt werden.

Besonders vorteilhaft ist die Ausbildung eines Fahrzeugreifens gemäß den Merkmalen von Anspruch 8, wobei in der Umfangrippe Rillen ausgebildet sind, die längs ihrer Erstreckung vom Erstreckungsanfang bis zur Umfangsrille mit gleichbleibend ausgerichteter Umfangsorientierung ausgebildet sind.

Besonders vorteilhaft ist die Ausbildung eines Fahrzeugreifens gemäß den Merkmalen von Anspruch 9, wobei der Umfangrippe Rillen ausgebildet sind, die längs ihrer Erstreckung in vom Erstreckungsanfang bis zur Umfangsrille mit einer in der Knickstelle wechselnden Umfangsorientierung ausgebildet sind.

Die Erfindung wird im Folgenden an Hand der in den Figuren 1 bis 8 dargestellten Ausführungsbeispiele näher erläutert. Hierin zeigen
- Fig.1: einen Umfangsabschnitt eines Laufstreifenprofils eines Pkw-Reifens in Draufsicht,
- Fig.2: einen vergrößerten Abschnitt einer Umfangsrippe des Laufstreifenprofils von Fig. 1 in Draufsicht,
- Fig.3: eine Schnittdarstellung einer Querrille der Umfangsrippe von Fig.2 gemäß Schnitt III-III von Fig.2,
- Fig.4: die Querrille von Fig.3 in Schnittdarstellung gemäß Schnitt IV-IV von Fig.2,
- Fig.5: die Querrille von Fig.3 in Schnittdarstellung gemäß Schnitt V-V von Fig.2,
- Fig.6: eine alternative Ausbildung einer Querrille der Umfangsrippe von Fig.2 in Schnittdarstellung gemäß Schnitt VI-VI von Fig.2,
- Fig.7: die Querrille von Fig.6 in Schnittdarstellung gemäß Schnitt VII-VII von Fig.2 und
- Fig.8: die Querrille von Fig.6 in Schnittdarstellung gemäß Schnitt VIII-VII von Fig.2.

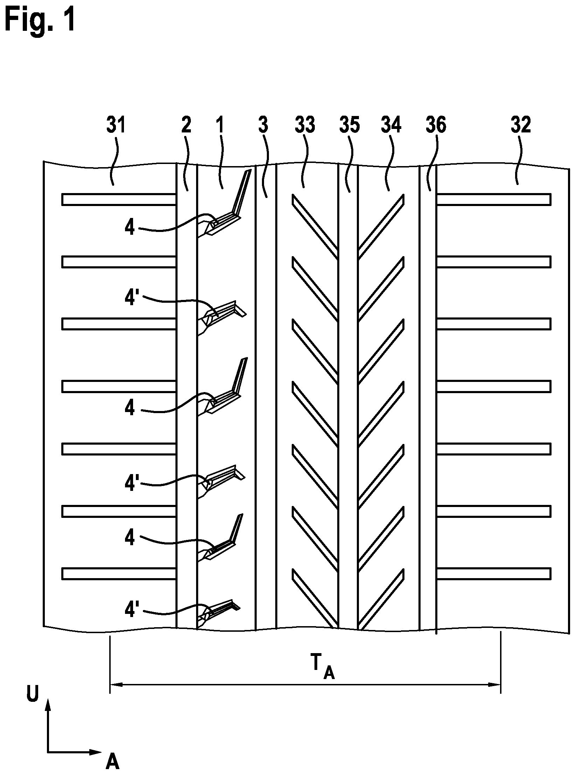

Fig.1 zeigt ein Laufstreifenprofil eines Fahrzeugluftreifens eines Personenkraftwagens (Pkw), bei welchem in herkömmlicher Weise n axialer Richtung A des Fahrzeugluftreifens mehrere radial erhabene Profilbänder, welche sich jeweils über den gesamten Umfang des Fahrzeugluftreifens erstrecken und in Umfangsrichtung U ausgerichtet sind, nebeneinander angeordnet sind. Dabei ist in jeder der beiden Reifenschultern jeweils ein Profilband 31 bzw. 32 und axial zwischen den beiden Reifenschultern als Umfangsrippen, 1, 33 und 34 ausgebildete Profilbänder angeordnet. Die beiden Profilbänder 31 und 32 sind beispielsweise Profilblockreihen bekannter Art, bei welchen in Umfangsrichtung hintereinander angeordnete Profilblockelemente jeweils durch querverlaufende Querrillen in Umfangsrichtung U voneinander getrennt sind. Die Umfangsrippen 1, 33 und 34 sind Umfangsrippen bekannter Art, welche sich über den gesamten Umfang des Fahrzeugluftreifens erstrecken und in Umfangsrichtung U ausgerichtet sind. Die Umfangsrippe 1 ist von der Profilblockreihe 31 in bekannter Weise durch eine über den gesamten Umfang des Fahrzeugluftreifens erstreckte und in Umfangsrichtung U des Fahrzeugluftreifens ausgerichtete Umfangsrille 2 axial getrennt. Die Umfangsrippe 1 ist von der Umfangsrippe 33 durch eine Umfangsrille 3 axial getrennt. Die Umfangsrippe 33 ist von der Umfangsrippe 34 durch eine Umfangsrille 35 axial getrennt. Die Umfangsrippe 34 ist von der Profilblockreihe 32 durch eine Umfangsrille 36 bekannter Art axial getrennt. Die Bodenaufstandsbreite T_{A} erstreckt sich in axialer Richtung A aus dem axialen Erstreckungsbereich der in der linken Schulter ausgebildeten Schulterprofilblockreihe 31 bis in den axialen Erstreckungsbereich der in der rechten Schulter ausgebildeten Profilblockreihe 32.

Die Profilblockreihen 31 und 32 sowie die Umfangsrippen 1, 33 und 34 sind in radialer Richtung R des Fahrzeugluftreifens nach außen hin durch eine innerhalb der Bodenaufstandsbreite T_{A} die Bodenkontaktoberfläche bildende, radial äußere Oberfläche 9 begrenzt. Die Umfangsrillen 2, 3, 35 und 36 sind in radialer Richtung R nach innen hin in bekannter Weise durch einen Rillengrund begrenzt, der sich über den gesamten Umfang des Fahrzeugluftreifens erstreckt.

In der Umfangsrippe 1 sind über den Umfang des Fahrzeugluftreifens verteilt in Umfangsrichtung U des Fahrzeugluftreifens voneinander beabstandet Querrillen 4 ausgebildet. Die Querrillen 4 erstrecken sich dabei in axialer Richtung A ausgehend von einer in der radial äußeren Oberfläche 9 im Abstand K von der Umfangsrille 3 gemessenen Position bis zur Umfangsrille 2 und münden in diese.

Die Umfangsrillen 2 und 3 sind längs ihrer Erstreckung mit einer in radialer Richtung R nach innen hin gemessenen maximalen Profiltiefe P_{T} ausgebildet.

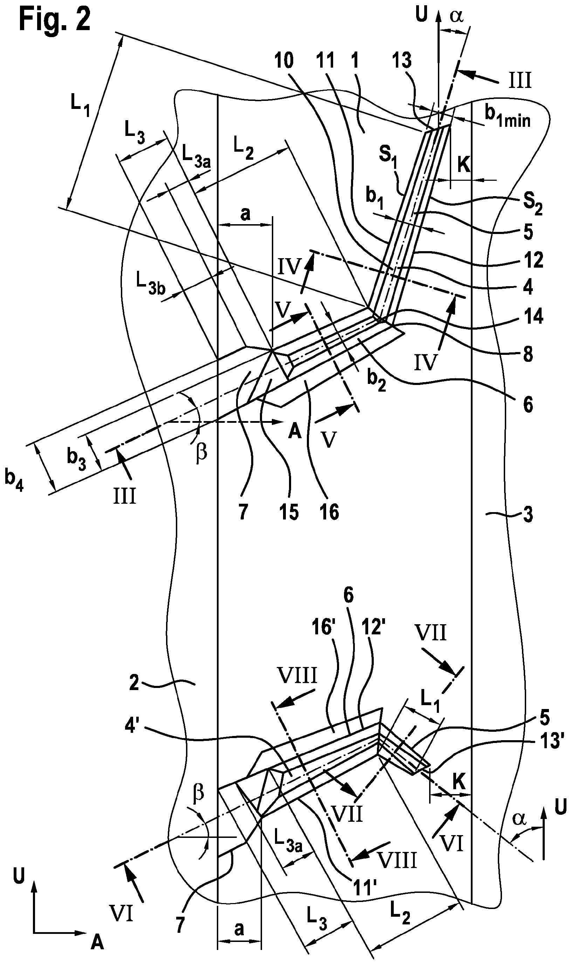

Wie in den Figuren 2 bis 5 dargestellt ist, sind die Querrillen 4 in radialer Richtung R nach innen hin durch einen Rillengrund 10 und in Umfangsrichtung U zur einen - in Fig.2 oberhalb des Rillengrundes 10 dargestellten - Seite durch eine dem Rillengrund 10 in Umfangsrichtung U nachgeordnete Rillenwand 11 und in Umfangsrichtung U zur anderen - in Fig.2 unterhalb des Rillengrundes 10 dargestellten - Seite durch eine dem Rillengrund 10 in Umfangsrichtung U vorgeordnete Rillenwand 12 begrenzt. Die Querrille 4 ist längs ihrer Erstreckung an ihrem von der Umfangsrille 2 wegweisenden Erstreckungsende von einer Rillenwand 13 begrenzt. Die Rillenwände 11, 12 und 13 erstrecken sich jeweils in radialer Richtung R ausgehend vom Rillengrund 10 der Rille 4 bis zur radial äußeren Oberfläche 9.

Wie in Fig. 2 zu erkennen ist, ist die Querrille 4 ausgehend von ihrem in der Rillenwand 13 ausgebildeten Erstreckungsanfang längs ihrer Erstreckung bis zur Umfangsrille 2 mit drei hintereinander ausgebildeten Erstreckungsabschnitten 5, 6 und 7 ausgebildet. Die Rille 4 ist dabei in ihrem ersten Erstreckungsabschnitt 5, welcher sich von der Position des Erstreckungsbeginns in der Rillenwand 13 bis zu einer Knickstelle 8 im Verlauf der Rille 4 erstreckt, geradlinig unter Einschluss eines Neigungswinkels α zur Umfangsrichtung U ausgebildet. Im Anschluss an die Knickstelle 8 ist die Querrille 4 in einem zweiten Erstreckungsabschnitt 6 geradlinig und in deren geradliniger Verlängerung in einem dritten Erstreckungsabschnitt 7 geradlinig erstreckt ausgebildet. Im zweiten Erstreckungsabschnitt 6 und im dritten Erstreckungsabschnitt 7 ist die Querrille 4 in ihrem Erstreckungsverlauf unter Einschluss eines Neigungswinkels β zur axialen Richtung A des Fahrzeugluftreifens erstreckt ausgebildet ist. Der Winkel α ist dabei mit 0° ≤ α ≤ 20° und der Winkel β ist mit 0° ≤ β ≤ 35° gewählt ausgebildet. Beispielsweise ist α = 15° und β = 30° gewählt.

Die Querrille 4 ist dabei ausgehend von der Rillenwand 13 längs ihrer Erstreckung bis zur Umfangsrille 2 hin mit einer gleichbleibenden Orientierung in Umfangsrichtung U ausgerichtet.

Im Bereich der Knickstelle 8 ist der zwischen dem Verlauf des Rillengrunds 10 im ersten Erstreckungsabschnitt 5 und im zweiten Erstreckungsabschnitt 6 über die Rillenwand 11 hinweg eingeschlossene Winkel kleiner als 180°.

Die Rillenwand 11 bildet an ihrer Schnittstelle mit der radial äußeren Oberfläche 9 eine Schnittkante S₁,. Die Rillenwand 12 bildet an ihrer Schnittstelle mit der radial äußeren Oberfläche 9 eine Schnittkante S₂. Im Bereich der Schnittkante S₁ erstreckt sich der erste Erstreckungsabschnitt 5 über eine in Erstreckungsrichtung der Querrille 4 im ersten Erstreckungsabschnitt 5 gemessene Erstreckungslänge L₁, der zweite Erstreckungsabschnitt über eine in Erstreckungsrichtung der Querrille 4 im zweiten Erstreckungsabschnitt 6 gemessene Erstreckungslänge L₂ und der dritte Erstreckungsabschnitt über eine in Erstreckungsrichtung der Querrille 4 im zweiten Erstreckungsabschnitt 6 gemessene Erstreckungslänge L₃.

Längs der Erstreckung der Schnittkante S₁ ist die Querrille 4 mit einer in der radial äußeren Oberfläche 9 senkrecht zur Erstreckungsrichtung der Querrille 4 im ersten Erstreckungsabschnitt 5 mit einer Breite b₁ ausgebildet, welche längs der Erstreckung der Querrille 4 im ersten Erstreckungsbereich 5 bis zur Knickstelle 8 hin kontinuierlich erweitert ausgebildet ist, und in der Fortführung im zweiten Erstreckungsabschnitt 6 ausgehend von der Knickstelle 8 mit einer senkrecht zur Erstreckungsrichtung der Rille 4 im zweiten Erstreckungsabschnitt 6 gemessenen kontinuierlich erweiterten Breite b₂ weitergeführt wird. Somit nimmt die Breite b der Querrille 4 in der radial äußeren Oberfläche 9 ausgehend vom Erstreckungsbeginn über ihre gesamte Erstreckung an der Rillenwand 13 im ersten 5 und zweiten 6 Erstreckungsabschnitt kontinuierlich zu. Die Schnittkante S₁ ist im ersten Erstreckungsabschnitt 5 und im zweiten Erstreckungsabschnitt 6 jeweils geradlinig erstreckt ausgebildet. Ebenso ist die Schnittkante S₂ im ersten Erstreckungsabschnitt 5 geradlinig ausgebildet. Die Schnittkante S₂ ist auch im zweiten 6 und im dritten Erstreckungsabschnitt 7 geradlinig ausgebildet, wobei sie sich von der Knickstelle 8 bis zur Umfangsrille 2 hin geradlinig erstreckt. Die Schnittkante S₁ erstreckt sich von der Knickstelle 8 über die Erstreckungslänge L₂ geradlinig bis in einen in axialer Richtung A gemessenen Abstand a von der Umfangsrille 2, wo der dritte Erstreckungsabschnitt 7 beginnt.

Dabei ist die Schnittkante S₁ in einem ersten Teil des dritten Erstreckungsabschnittes 7 mit einer in der Erstreckungsrichtung der Schnittkante S₁ des zweiten Erstreckungsabschnitts 6 gemessenen Erstreckungslänge L₃ₐ unter Einschluss eines Knicks von der Schnittkante S₂ geradlinig wegweisend verlaufend und im Anschluss daran wieder zur Schnittkante S₂ hin geknickt und über die Erstreckungslänge L_{3b} bis zur Umfangsrille 2 geradlinig verlaufend ausgebildet. Dabei ist auch längs der Erstreckung der Querrille 4 in Richtung zur Umfangsrille 2 hin jeweils in dem Erstreckungsabschnitt der Erstreckungslänge L₃ₐ und in dem Erstreckungsabschnitt L_{3b} bis zur Umfangsrille hin die senkrecht zum Verlauf der Schnittkante S₁ im zweiten Erstreckungsabschnitt 6 gemessene Breite b₃ jeweils kontinuierlich vergrößert ausgebildet. Die Zunahme der Breite b₃ über die Erstreckungslänge ist dabei im Abschnitt der Erstreckungslänge L₃ₐ größer als in den im ersten Erstreckungsabschnitt 5, dem zweiten Erstreckungsabschnitt 6 und dem an die Umfangsrille 2 anschließenden Erstreckungsbereich der Länge L_{3b}.

Die Schnittkanten S₁ und S₂ bilden längs der Erstreckung der Querrille 4 im ersten Erstreckungsabschnitt 5, im zweiten Erstreckungsabschnitt 6 und in den beiden Teilabschnitten der Längen L₃ₐ und L_{3b} des dritten Erstreckungsabschnitts 7 jeweils eine sich V-förmig erweiternde Schnittkontur der Querrille 4 in der radial äußeren Oberfläche 9.

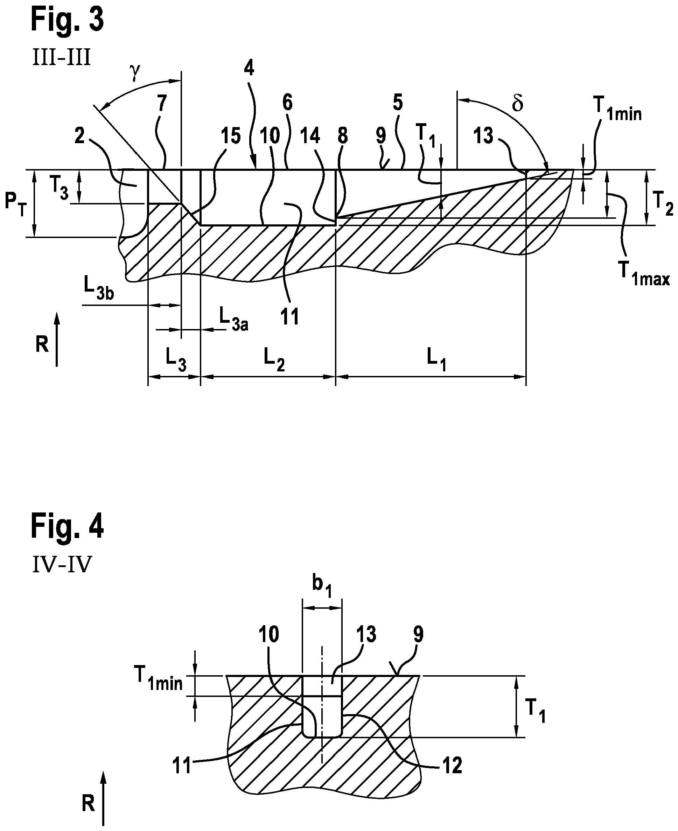

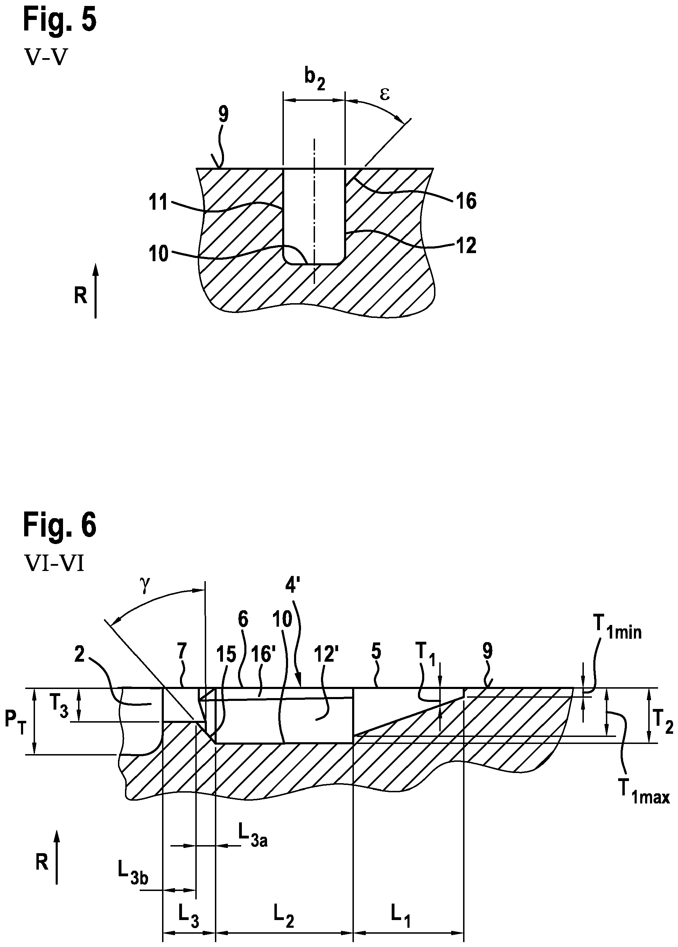

Die Querrille 4 ist in - wie in Fig.3 und Fig.4 dargestellt ist - ihrem ersten Erstreckungsabschnitt 5 mit einer Tiefe T₁ ausgebildet, welche ausgehend von einem minimalen Wert der Tiefe T₁ₘᵢₙ, welche sie in der Position der Rillenwand 13 einnimmt, über die gesamte Erstreckung der Querrille 4 im ersten Erstreckungsabschnitt 5 bis zur Knickstelle 8 hin kontinuierlich zunimmt bis zu einer maximalen Tiefe T₁ₘₐₓ, welche sie in der Position der Knickstelle 8 erreicht. Im Übergang zwischen ersten Erstreckungsabschnitt 5 und zweitem Erstreckungsabschnitt 6 in der Position der Knickstelle 8 ist der Rillengrund 10 dann - wie in Fig.3 dargestellt ist - unter Einschluss einer Stufe 8 auf eine Tiefe T₂ abgesenkt, wobei im Anschluss an die Stufe 8 - wie in Fig.3 und Fig.5 dargestellt ist - die Querrille 4 über ihren gesamten zweiten Erstreckungsabschnitt 6 mit der Tiefe T₂ ausgebildet ist, mit T₂ ≥ T₁ₘₐₓ. Die Stufe 8 ist dabei so bemessen, dass für die Differenz ΔT= (T₂ - T₁ₘₐₓ) gilt: 0mm ≤ ΔT ≤ 3mm. Beispielsweise ist die Differenz ΔT = 1mm ausgebildet.

Im Übergang zwischen zweitem Erstreckungsabschnitt 6 und drittem Erstreckungsabschnitt 7 ist - wie in Fig.3 dargestellt ist - der Rillengrund 10 auf eine Tiefe T₃ angehoben und erstreckt sich mit dieser Tiefe T₃ bis hin zur Umfangsrille 2. Die Tiefe T₃ ist mit T₃ > T₂ ausgebildet. Im Erstreckungsabschnitt der Länge L₃ₐ des dritten Erstreckungsabschnitts 7 ist dabei der Übergang zwischen der Tiefe T₂ des zweiten Erstreckungsabschnitt 6 und der Tiefe T₃ mit als Rampe 15 ausgebildetem Rillengrund 10 ausgebildet.

Der Wert der minimalen Tiefe T₁ₘᵢₙ ist mit 0mm ≤ T₁ₘᵢₙ ≤ 0,2mm ausgebildet. Der maximale Wert T₁ₘₐₓ ist mit 4mm ≤ T₁ₘₐₓ ≤ P_{T} ausgebildet. Die Profiltiefe P_{T} ist mit 7mm ≤ P_{T} ≤ 8mm ausgebildet.

Die Tiefe T₂ ist mit 7mm ≤ T₂ ≤ 8mm ausgebildet.

Die Tiefe T₃ ist mit 3mm ≤ T₃ ≤ 5mm gewählt ausgebildet.

Die Breite b₁ im ersten Erstreckungsabschnitt 5 ist am Übergang zwischen Rillenwand 13 und Rillenwand 11 mit ihrer gemessene minimalen Breite b₁ₘᵢₙ mit b₁ₘᵢₙ =1,5mm und am Übergang zum zweiten Erstreckungsabschnitt mit ihrer maximalen Breite b₁ₘₐₓ mit b₁ₘₐₓ = 3mm ausgebildet. Die Breite b₂ ist mit ihrem maximalen Wert b₂ₘₐₓ in der Position der Rillenwand 11 im Übergang zwischen zweiten Erstreckungsabschnitt 6 zum dritten Erstreckungsabschnitt 7 mit b₂ₘₐₓ = 4mm ausgebildet. Die Breite b₃ des ersten Teils des dritten Erstreckungsabschnitts 7 der Querrille 4 ist im Übergang zwischen dem ersten Teil des dritten Erstreckungsabschnitts 7 mit der Erstreckungslänge L₃ₐ und dem zweiten Teil des dritten Erstreckungsabschnitts 7 mit der Erstreckungslänge L_{3b} ist mit ihrem Maximum b₃ₘₐₓ = 5mm ausgebildet. Die senkrecht zum Erstreckungsverlauf des zweiten Erstreckungsabschnitts 6 gemessene Breite b₄ des zweiten Teils des dritten Erstreckungsabschnitts 7 der Querrille 4 ist in der Schnittposition zwischen Rillenwand 11 und Umfangsrille 4 mit ihrem Maximum b₄ₘₐₓ = 5,5mm ausgebildet.

Die Erstreckungslängen L₁, L₂, L₃ und L₄ sind mit 10mm ≤ L₁ ≤ 15mm, 10mm ≤ L₂≤ 20mm, L₃ = 5mm und L₄ = 5mm ausgebildet.

Der axiale Abstand a ist mit 8mm ≤ a ≤ 10mm gewählt ausgebildet.

Die Figuren 2, 3, 4 und 5 zeigen auch ein weiteres Ausführungsbeispiel, bei welchem längs des zweiten Erstreckungsabschnitts 6 in der Rillenwand 12 am Übergang der Rillenwand 12 zur radial äußeren Oberfläche 9 eine Fase 16 ausgebildet ist, welche in den senkrecht zur Erstreckungsrichtung der Querrille 4 im zweiten Erstreckungsabschnitt 6 gebildeten Schnittebenen unter Einschluss eines Neigungswinkels ε mit ε = 45° zur radialen Richtung R ausgerichtet ist. Bei diesem Ausführungsbeispiel ist die Schnittkante S₂ die durch Verlängerung der Rillenwand 12 in ihrer radialen Erstreckung nach außen hin bis zur radial äußeren Oberfläche 9 gebildete Schnittkante mit der radial äußeren Oberfläche 9 und die Breite b₂ bemisst sich zwischen dieser gebildeten Schnittkante S₂ und der Schnittkante S₁.

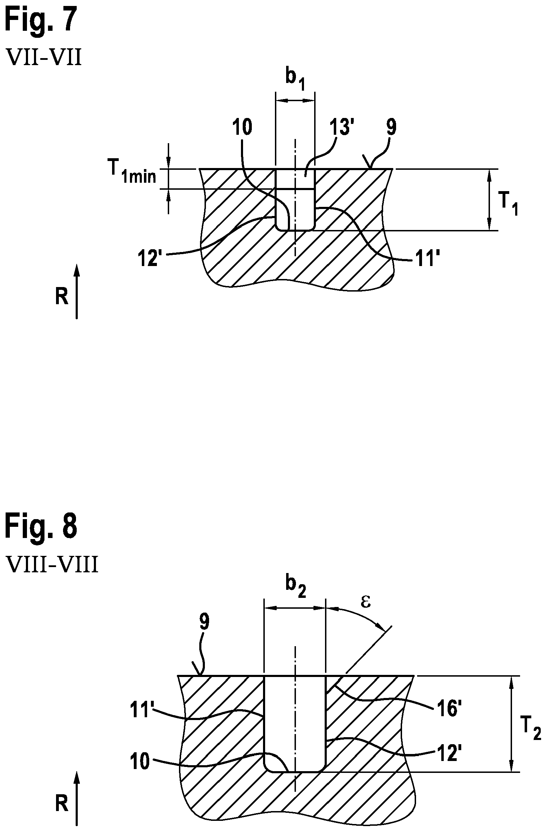

Die Figuren 1 und 2 zeigen auch ein anderes Ausführungsbeispiel mit in der Umfangsrippe 1 ausgebildeten Querrillen 4', welche analog zur Ausbildung der Querrillen 4 mit erstem Erstreckungsabschnitt 5, zweitem Erstreckungsabschnitt 6 und drittem Erstreckungsabschnitt 7 und deren jeweiligen Verläufen ausgebildet sind. Die Querrillen 4' sind beiderseits ihres Rillengrundes 10 jeweils von Flanken 11' und 12' und an ihrem Erstreckungsanfang von einer Rillenwand 13' begrenzt. Anders als bei der Querrille 4 weist jedoch die Querrille 4' ausgehend von ihrem Erstreckungsanfang an der Rillenwand 13' bis zur Umfangsrille 2 längs ihrer axialen Erstreckung in ihrem ersten Erstreckungsabschnitt 5 einen Verlauf auf, dessen Ausrichtung in Umfangsrichtung U entgegengesetzt zur Ausrichtung in Umfangsrichtung im zweiten und dritten Erstreckungsabschnitt 6 und 7 orientiert ist. Somit ist bei dieser Ausbildung an der Knickstelle 8 auch ein Orientierungswechsel des Verlaufes hinsichtlich ihrer Umfangsausrichtung mit ausgebildet. In dem in Figur 2 dargestellten Ausführungsbeispiel ist gut erkennbar, dass im ersten Erstreckungsabschnitt 5 der Querrille 4' bis zur Knickstelle 8 hin die Umfangsorientierung in der Figur 5 nach oben hin und im zweiten und dritten Erstreckungsabschnitt 6und 7 bis zur Umfangsrille 2 hin die Umfangsorientierung in der Figur 5 nach unten hin gewählt ist. Dabei ist - wie den Figuren 2, 6, 7 und 8 zu entnehmen - die Querrille 4' auch bei dieser Ausführung im ersten Erstreckungsabschnitt 5 mit einer bis zur Knickstelle 8 hin kontinuierlich zunehmenden Tiefe T₁, dann im Anschluss an eine Stufe 14 im zweiten Erstreckungsabschnitt 6 mit einer konstanten Tiefe T₂ und im dritten Erstreckungsabschnitt 7 längs einer Rampe 15 mit einem bis auf eine Tiefe T₃ angehobenen Rillengrund 10 ausgebildet. Ebenso ist erkennbar, dass auch bei dieser Ausbildung ausgehend von der Rillenwand 13' längs der gesamten axialen Erstreckung der Querrille 4' die Breite b der Rille 4' kontinuierlich vergrößert wird.

Die Figuren 1 und 2 zeigen ein weiteres Ausführungsbeispiel, bei welchem in der Umfangsrippe 1 über den Umfang verteilt Querrillen 4 und Querrillen 4' in alternierender Abfolge hintereinander angeordnet sind. Dabei ist zu erkennen, dass die Erstreckungsrichtung der Querrillen 4 und 4' im Erstreckungsabschnitt zwischen Umfangsrille 2 und Knickstelle 8 jeweils im Wesentlichen parallel verlaufend ausgebildet ist.

### Bezugszeichenliste

### (Teil der Beschreibung)

- 1: Umfangsrippe
- 2: Umfangsrille
- 3: Umfangsrille
- 4: Querrille
- 5: Erster Erstreckungsabschnitt
- 6: Zweiter Erstreckungsabschnitt
- 7: Dritter Erstreckungsabschnitt
- 8: Knickstelle
- 9: Radial äußere Oberfläche
- 10: Rillengrund
- 11: Rillenwand
- 12: Rillenwand
- 13: Rillenwand
- 14: Stufe
- 15: Rampe
- 16: Fase
- 31: Profilband
- 32: Profilband
- 33: Umfangsrippe
- 34: Umfangsrippe
- 35: Umfangsrille
- 36: Umfangsrille

## Patentansprüche

1. Laufstreifenprofil eines Fahrzeugluftreifens - insbesondere eines PKW-Fahrzeugluftreifens - mit wenigstens einer Umfangsrippe (1), die in radialer Richtung R nach außen hin von einer die Bodenkontaktfläche bildenden radial äußeren Oberfläche (9) und in axialer Richtung A von Umfangsrillen (2,3) begrenzt ist, wobei in der Umfangsrippe (1) querverlaufende Rillen (4,4') ausgebildet sind, welche sich ausgehend von einem mit axialem Abstand zu den die Umfangsrippe (1) begrenzenden Umfangsrillen (2,3) ausgebildeten Erstreckungsanfang der Rille (4,4') in axialer Richtung A in Richtung zu einer die Umfangsrippe (1) begrenzenden Umfangsrille (2) über einen ersten Erstreckungsabschnitt (5) und über einen in axialer Richtung A an den ersten Erstreckungsabschnitt (5) anschließenden zweiten Erstreckungsabschnitt (6) erstrecken und in die Umfangsrille (2) münden, wobei die Rille (4,4') in ihrem Erstreckungsverlauf zwischen erstem Erstreckungsabschnitt (5) und zweitem Erstreckungsabschnitt (6) mit einer Knickstelle (8) ausgebildet ist, wobei die Erstreckungsrichtung der Rille (4,4') ausgehend von dem Erstreckungsanfang längs ihrer Erstreckung im ersten Erstreckungsabschnitt (5) bis zur Knickstelle (8) mit einer größeren Richtungskomponente in Umfangsrichtung U als in axialer Richtung A und von der Knickstelle (8) über den gesamten zweiten Erstreckungsabschnitt (6) bis hin zur Einmündung in die Umfangsrille (2) mit größerer Richtungskomponente in axialer Richtung A als in Umfangsrichtung ausgebildet ist,
wobei die Rille (4,4') im ersten Erstreckungsabschnitt (5) mit einer Tiefe T**₁** ausgebildet ist, welche ausgehend vom Erstreckungsanfang längs der Erstreckung über den ersten Erstreckungsabschnitt (5) bis zur Erreichung ihres Maximalwertes Timax an der Knickstelle (8) kontinuierlich zunehmend und im zweiten Erstreckungsabschnitt (6) mit konstanter Tiefe T2 mit T2 ≥ T₁ₘₐₓ ausgebildet ist
**dadurch gekennzeichnet,**
**dass** die Rille (4,4') mit einer längs ihrer gesamten Erstreckung zwischen Erstreckungsanfang und Umfangsrille (2) zunehmenden Breite b ausgebildet ist, welche in der radial äußeren Oberfläche (9) gemessen wird.

2. Laufstreifenprofil gemäß den Merkmalen von Anspruch 1,
wobei die Rille (4,4') längs ihrer Erstreckung zur Umfangsrille (2) hin im Anschluss an den zweiten Erstreckungsabschnitt (6) mit einem dritten Erstreckungsabschnitt (7) ausgebildet ist, welcher sich bis zur Umfangsrille (2) erstreckt, wobei die Rille (4,4') im dritten Erstreckungsabschnitt (7) mit einer konstanten Tiefe T₃ ausgebildet ist mit T₂ > T₃.

3. Laufstreifenprofil gemäß den Merkmalen von Anspruch 2,
wobei die Rille (4,4') längs ihrer Erstreckung in Richtung zur Umfangsrille (2) im dritten Erstreckungsabschnitt (7) hin im Anschluss an den zweiten Erstreckungsabschnitt (6) mit einer v-förmig erweiterter Schnittkontur in der radial äußeren Oberfläche (9) und in ihrer Breite mit größerer Zunahme ausgebildet ist als im zweiten (6) und im ersten (5) Erstreckungsabschnitt.

4. Laufstreifenprofil gemäß den Merkmalen von einem oder mehreren der vorangegangenen Ansprüche,
wobei die Rille (4,4') in ihrem ersten Erstreckungsabschnitt (5) mit einer Erstreckungsrichtung erstreckt ausgebildet ist, die einen Neigungswinkel α zur Umfangsrichtung U mit 0°≤α≤20° einschließt.

5. Laufstreifenprofil gemäß den Merkmalen von einem oder mehreren der vorangegangenen Ansprüche,
wobei die Rille (4,4') in ihrem Erstreckungsabschnitt (5) zwischen Knickstelle (8) und Umfangsrille (2) mit einer Erstreckungsrichtung erstreckt ausgebildet ist, die einen Neigungswinkel β zur axialen Richtung A mit 0°≤ β ≤ 35° einschließt.

6. Laufstreifenprofil gemäß den Merkmalen von einem oder mehreren der vorangegangenen Ansprüche,
wobei die Rille (4,4') längs ihrer Erstreckung in Richtung zur Umfangsrille (2) hin im ersten (5) und im zweiten (6) Erstreckungsabschnitt mit einer v-förmig erweiterter Schnittkontur in der radial äußeren Oberfläche (9) mit kontinuierlich zunehmender Breite ausgebildet ist.

7. Laufstreifenprofil gemäß den Merkmalen von einem oder mehreren der vorangegangenen Ansprüche,
wobei im Übergang zwischen erstem (5) und zweitem (6) Erstreckungsabschnitt der Rillengrund (10) mit einer Stufe (14) abgesenkt ist mit sprunghafter Veränderung der Rillentiefe von Timax auf T₂, wobei 0mm ≤ (T₂ - T₁ₘₐₓ)≤ 3mm.

8. Laufstreifenprofil gemäß den Merkmalen von einem oder mehreren der vorangegangenen Ansprüche,
wobei in der Umfangsrippe (1) Rillen (4) ausgebildet sind, die längs ihrer Erstreckung vom Erstreckungsanfang bis zur Umfangsrille (2) mit gleichbleibend ausgerichteter Umfangsorientierung ausgebildet sind.

9. Laufstreifenprofil gemäß den Merkmalen von einem oder mehreren der vorangegangenen Ansprüche,
wobei in der Umfangsrippe (1) Rillen (4') ausgebildet sind, die längs ihrer Erstreckung in vom Erstreckungsanfang bis zur Umfangsrille (2) mit einer in der Knickstelle wechselnden Umfangsorientierung ausgebildet sind.

## Claims

1. Tread profile of a pneumatic vehicle tyre - in particular a pneumatic passenger car tyre - with at least one circumferential rib (1), which is outwardly bounded in the radial direction R by a radially outer surface (9), forming the ground contact surface, and in the axial direction A by circumferential grooves (2, 3), wherein there are formed in the circumferential rib (1) transversely running grooves (4, 4'), which extend in the axial direction A from a beginning of extent of the groove (4, 4'), formed at an axial distance from the circumferential grooves (2, 3) bounding the circumferential rib (1), in the direction of a circumferential groove (2) bounding the circumferential rib (1), over a first portion of extent (5) and over a second portion of extent (6), which adjoins the first portion of extent (5) in the axial direction A, and the transverse grooves open into the circumferential groove (2), wherein the groove (4, 4') is formed in the course of its extent between the first portion of extent (5) and the second portion of extent (6) with a vertex point (8), wherein the direction of extent of the groove (4, 4') from the beginning of extent along its extent in the first portion of extent (5) to the vertex point (8) is formed with a greater directional component in the circumferential direction U than in the axial direction A and from the vertex point (8) over the entire second portion of extent (6) up to the opening into the circumferential groove (2) is formed with a greater directional component in the axial direction A than in the circumferential direction,
wherein the groove (4, 4') is formed in the first portion of extent (5) with a depth T₁, which is formed as increasing continuously from the beginning of extent along the extent over the first portion of extent (5) up to reaching its maximum value T₁ₘₐₓ at the vertex point (8), and is formed in the second portion of extent (6) with a constant depth T₂, where T₂ ≥ T₁ₘₐₓ,
**characterized in that**
the groove (4, 4') is formed with a width b, which is measured in the radially outer surface (9), increasing along its entire extent between the beginning of extent and the circumferential groove (2).

2. Tread profile according to the features of Claim 1, wherein the groove (4, 4') is formed along its extent up to the circumferential groove (2) following after the second portion of extent (6) with a third portion of extent (7), which extends up to the circumferential groove (2), wherein the groove (4, 4') is formed in the third portion of extent (7) with a constant depth T₃, where T₂ > T₃.

3. Tread profile according to the features of Claim 2, wherein the groove (4, 4') is formed along its extent in the direction of the circumferential groove (2) in the third portion of extent (7), following after the second portion of extent (6), with a v-shaped widened sectional contour in the radially outer surface (9) and with a greater increase in its width than in the second portion of extent (6) and the first portion of extent (5).

4. Tread profile according to the features of one or more of the preceding claims,
wherein the groove (4, 4') is formed so as to extend in its first portion of extent (5) with a direction of extent that forms an angle of inclination α in relation to the circumferential direction U, where 0° ≤ α ≤ 20°.

5. Tread profile according to the features of one or more of the preceding claims,
wherein the groove (4, 4') is formed so as to extend in its portion of extent (5) between the vertex point (8) and the circumferential groove (2) with a direction of extent that forms an angle of inclination β in relation to the axial direction A, where 0° ≤ β ≤ 35°.

6. Tread profile according to the features of one or more of the preceding claims,
wherein the groove (4, 4') is formed along its extent in the direction of the circumferential groove (2) in the first portion of extent (5) and the second portion of extent (6) with a v-shaped widened sectional contour in the radially outer surface (9) with a continuously increasing width.

7. Tread profile according to the features of one or more of the preceding claims,
wherein, at the transition between the first portion of extent (5) and the second portion of extent (6), the groove base (10) is formed with a step (14) with an abrupt change in the groove depth from T₁ₘₐₓ to T₂, where 0 mm ≤ (T₂ - T₁ₘₐₓ) ≤ 3 mm.

8. Tread profile according to the features of one or more of the preceding claims,
wherein there are formed in the circumferential rib (1) grooves (4) which are formed with a constantly aligned circumferential orientation along their extent from the beginning of extent to the circumferential groove (2).

9. Tread profile according to the features of one or more of the preceding claims,
wherein there are formed in the circumferential rib (1) grooves (4') which are formed with a circumferential orientation changing at the vertex point along their extent from the beginning of extent to the circumferential groove (2).

## Revendications

1. Sculpture de bande de roulement d'un pneumatique de véhicule, en particulier d'un pneumatique de véhicule de voiture particulière, comprenant au moins une nervure périphérique (1) qui est limitée dans la direction radiale R vers l'extérieur par une surface radialement extérieure (9) formant la surface de contact avec le sol et dans la direction axiale A par des rainures périphériques (2, 3), dans laquelle des rainures (4, 4') s'étendant transversalement sont formées dans la nervure périphérique (1) et s'étendent à partir d'un début d'étendue de la rainure (4, 4'), réalisé à distance axiale par rapport aux rainures périphériques (2, 3) délimitant la nervure périphérique (1), dans la direction axiale A en direction d'une rainure périphérique (2) délimitant la nervure périphérique (1) sur une première partie d'étendue (5) et sur une deuxième partie d'étendue adjacente à la première partie d'étendue (5) dans la direction axiale A, et débouchent sur la rainure périphérique (2), dans laquelle la rainure (4, 4') est réalisée sur son tracé d'étendue avec un point d'inflexion (8) entre la première partie d'étendue (5) et la deuxième partie d'étendue (6), dans laquelle la direction d'étendue de la rainure (4, 4') est réalisée à partir du début d'étendue le long de son étendue dans la première partie d'étendue (5) jusqu'au point d'inflexion (8) avec une plus grande composante directionnelle dans la direction périphérique U que dans la direction axiale A et à partir du point d'inflexion (8) sur toute la deuxième partie d'étendue (6) jusqu'à l'entrée dans la rainure périphérique (2) avec une plus grande composante directionnelle dans la direction axiale A que dans la direction périphérique, dans laquelle la rainure (4, 4') est réalisée dans la première partie d'étendue (5) avec une profondeur T₁, qui est réalisée en augmentant de manière continue à partir du début d'étendue le long de l'étendue sur la première partie d'étendue (5) jusqu'à atteindre sa valeur maximale T₁ₘₐₓ au point d'inflexion (8), et est réalisée dans la deuxième partie d'étendue (6) avec une profondeur constante T₂, où T₂ ≥ T₁ₘₐₓ,
**caractérisée en ce que** la rainure (4, 4') est réalisée avec une largeur b augmentant le long de toute son étendue entre le début d'étendue et la rainure périphérique (2) et mesurée dans la surface radialement extérieure (9).

2. Sculpture de bande de roulement selon les particularités de la revendication 1, dans laquelle la rainure (4, 4') est réalisée le long de son étendue vers la rainure périphérique (2) après la deuxième partie d'étendue (6) avec une troisième partie d'étendue (7) qui s'étend jusqu'à la rainure périphérique (2), la rainure (4, 4') étant réalisée dans la troisième partie d'étendue (7) avec une profondeur constante T₃, où T₂ > T₃.

3. Sculpture de bande de roulement selon les particularités de la revendication 2, dans laquelle la rainure (4, 4') est réalisée le long de son étendue en direction de la rainure périphérique (2) dans la troisième partie d'étendue (7) après la deuxième partie d'étendue (6) avec un contour de section évasé en forme de V dans la surface radialement extérieure (9) et en largeur avec une augmentation plus grande que dans la deuxième (6) et dans la première (5) partie d'étendue.

4. Sculpture de bande de roulement selon les particularités d'une ou de plusieurs des revendications précédentes, dans laquelle la rainure (4, 4') est réalisée en s'étendant dans sa première partie d'étendue (5) avec une direction d'étendue qui forme un angle d'inclinaison α par rapport à la direction périphérique U, où 0° ≤ α ≤ 20°.

5. Sculpture de bande de roulement selon les particularités d'une ou de plusieurs des revendications précédentes, dans laquelle la rainure (4, 4') est réalisée dans sa partie d'étendue (5) en s'étendant entre le point d'inflexion (8) et la rainure périphérique (2) avec une direction d'étendue qui forme un angle d'inclinaison β par rapport à la direction axiale A, où 0° ≤ β ≤ 35°.

6. Sculpture de bande de roulement selon les particularités d'une ou de plusieurs des revendications précédentes, dans laquelle la rainure (4, 4') est réalisée le long de son étendue en direction de la rainure périphérique (2) dans la première (5) et dans la deuxième (6) partie d'étendue avec un contour de section évasé en forme de V dans la surface extérieure radiale (9) avec une largeur augmentant de manière continue.

7. Sculpture de bande de roulement selon les particularités d'une ou de plusieurs des revendications précédentes, dans laquelle, à la transition entre la première (5) et la deuxième (6) partie d'étendue, le fond de rainure (10) est abaissé en gradin (14) avec une variation brusque de la profondeur de rainure de T₁ₘₐₓ à T₂, où 0 mm ≤ (T₂ - T₁ₘₐₓ) ≤ 3 mm.

8. Sculpture de bande de roulement selon les particularités d'une ou de plusieurs des revendications précédentes, dans laquelle des rainures (4) sont réalisées dans la nervure périphérique (1) qui sont réalisées le long de leur étendue du début d'étendue jusqu'à la rainure périphérique (2) avec une orientation périphérique à alignement constant.

9. Sculpture de bande de roulement selon les particularités d'une ou de plusieurs des revendications précédentes, dans laquelle des rainures (4') sont réalisées dans la nervure périphérique (1) qui sont réalisées le long de leur étendue du début d'étendue à la rainure périphérique (2) avec une orientation périphérique variant au point d'inflexion.
